# FASCICULE DE BREVET EUROPEEN

(11) **EP 1 461 847 B1**
(45) Date de publication et mention de la délivrance du brevet: **06.02.2008**
(21) Numéro de dépôt: 02801155.9
(22) Date de dépôt: 19.12.2002
(51) Int. Cl.: H01R 31/06

(54) **ENCEINTE ELECTRIQUE DE CONTACT ENCASTRABLE ET PROCEDE DE MONTAGE.**
EINGEBAUTES ELEKTRISCHES KONTAKTGEHÄUSE UND ANBRINGUNGSVERFAHREN
BUILT-IN ELECTRIC CONTACT ENCLOSURE AND MOUNTING METHOD

(30) Priorité: 21.12.2001 FR 0116792
(43) Date de publication de la demande: 29.09.2004
(73) Titulaire: Sibecx, 95450 Neuville sur Oise (FR)
(72) Inventeur: GAVINO, Denis, 95310 Saint Ouen L'Aumone (FR)
(74) Mandataire: Schmit, Christian Norbert Marie
(86) Numéro de dépôt international: PCT/FR2002/004470
(87) Numéro de publication internationale: WO 2003/055012

(56) Documents cités:
- DE-U- 7 502 705
- US-A- 3 922 478
- US-A- 4 425 016

## Description

L'invention concerne une enceinte électrique de contact encastrable et son procédé de montage associé. L'invention a pour but de faciliter le montage et le démontage de telles enceintes électriques encastrables dans une paroi, sans utiliser d'outils comme le tournevis, ni de vis pendant les phases de montage ou démontage de ces enceintes. Une paroi peut être un mur à l'intérieur duquel est creusé un trou afin d'y encastrer l'enceinte électrique selon l'invention. L'invention est plus particulièrement destinée au domaine de l'électricité mais peut également s'appliquer dans d'autres domaines. Dans le domaine de l'électricité, cette enceinte électrique permet notamment de connecter une prise électrique à une source génératrice de courant ou bien cette enceinte électrique permet de réaliser un interrupteur électrique destiné à établir une connexion électrique sur commande.

Une enceinte électrique comporte un boîtier et un dispositif électrique, notamment muni d'un cache. Le boîtier est destiné à s'insérer dans une paroi. Une paroi peut être verticale ou horizontale. Elle peut être constituée de tous les matériaux classiques utilisés en bâtiment (tel le béton, le parpaing, la brique, la pierre et autres complexes rigides formant des cloisons séparatrices notamment en plaques de plâtres avec des entretoises en carton). Le boîtier est percé de trous à l'intérieur desquels des fils électriques provenants de la paroi peuvent s'insérer. Le dispositif électrique comporte un premier côté et un deuxième côté. Le premier côté est placé en regard du boîtier. Les fils électriques sont destinés à se connecter sur ce premier côté. Dans un exemple, trois fils électriques sont destinés à se connecter à ce premier côté. Le deuxième côté est placé à l'extérieur du boîtier. Dans le cas d'une enceinte destinée à recevoir une prise électrique, ce deuxième côté du dispositif électrique et donc du cache peut comporter deux trous conducteurs servant à recevoir deux fiches d'une prise électrique. Ces deux trous sont directement connectés aux fils électriques. Le contact des deux fiches avec une paroi des deux trous du dispositif électrique directement connectés aux fils électriques suffit à réaliser la connexion électrique. Ou bien, le deuxième côté peut comporter une manette s'il s'agit d'un interrupteur. Dans ce cas, la connexion électrique est réalisée en appuyant sur la manette de manière à relier les fils électriques.

Dans le cas d'une enceinte électrique destinée à recevoir des fiches d'une prise électrique, les trous du dispositif électrique correspondent à des bornes femelles et les fiches d'une prise électrique sont des bornes mâles qui doivent s'engager dans ces bornes femelles. Habituellement, de telles enceintes électriques comportent deux bornes femelles. La troisième borne mâle étant destinée à servir de prise de terre.

Dans le cas du montage d'une enceinte destinée à recevoir une prise électrique, trois fils électriques provenant du mur sont d'abord placés à l'intérieur de l'enceinte en passant par des trous du boîtier. Puis les fils sont fixés aux trois bornes femelles ou mâles du dispositif électrique. Pour fixer les trois fils au dispositif électrique de l'interrupteur et/ou de la prise électrique, il est nécessaire de coincer les fils dans le dispositif électrique par une pièce intermédiaire. Par exemple, la pièce intermédiaire peut être un connecteur à vis, comportant notamment une plaque métallique. La plaque métallique est conductrice d'électricité. La vis est elle-même reliée à une borne femelle ou mâle. Pour coincer le fil dans le dispositif électrique, la vis est vissée.

Dans le cas du montage d'une telle enceinte électrique, des ponts électriques sont réalisables en raccordant un autre fil à partir de la vis de manière à réaliser une série de connexion électrique.

Cependant, la connexion des fils électriques au dispositif électrique ainsi que le raccordement d'un autre fil électrique nécessite l'utilisation de petites pièces intermédiaires difficiles à manipuler et susceptibles de s'échapper de leur logement au cours du montage. Leur manipulation ainsi que l'utilisation d'un tournevis rend le montage de telles enceintes électriques délicat et difficile.

De plus, une enceinte électrique ainsi réalisée n'est pas compatible avec tout type de prise électrique. Par exemple, une enceinte électrique destinée à recevoir une prise électrique de type européen ne permet pas l'insertion d'une prise électrique rectangulaire américaine. Pour admettre une telle prise américaine, il est nécessaire d'utiliser un adaptateur encombrant ou il est nécessaire de changer complètement l'enceinte.

Il est connu du document US 3,794,956 une enceinte électrique encastrable. Cette enceinte comporte un membre externe et un membre interne. Le membre interne est équipé de goupilles conductrices d'électricité et le membre externe est équipé de douilles conductrices d'électricité. Il se produit une connexion électrique lorsque les goupilles sont au contact des pins, c'est à dire lorsque le membre interne est partiellement sorti du membre externe.

Il est connu également le document DE 296. 22 212 et le document DE 34 03 053.

Pour résoudre ces problèmes de montage de telles enceintes électriques, l'invention prévoit un boîtier creusé d'un compartiment cylindrique. Ce compartiment cylindrique est destiné à recevoir un manchon de contact s'encastrant fixement par coulissement à l'intérieur du compartiment du boîtier. Ce manchon correspond au dispositif électrique de l'enceinte électrique précédemment décrite. Cependant, en s'encastrant à l'intérieur du compartiment du boîtier, le manchon selon l'invention réalise une connexion électrique. La connexion électrique est réalisée par le contact de trois plaques connectées à trois fils électriques disposées à une périphérie interne d'un espace central du compartiment avec trois lamelles conductrices d'électricité disposées sur le manchon. A l'intérieur de ces espaces de connexion, l'insertion des fils électriques ne nécessite pas l'utilisation d'outils tel que le tournevis. Les fils électriques sont insérés manuellement à l'intérieur de l'espace de connexion par une face d'un boîtier, depuis le mur jusque dans le boîtier. Le fil électrique provenant du mur est inséré de telle manière qu'il est directement en contact avec une des plaques conductrices d'électricité. Chaque plaque pourra alors être directement en contact avec une lamelle conductrice d'électricité disposée sur le manchon.

Dans l'invention, il n'y a plus besoin de visser les fils par l'intermédiaire d'une petite pièce intermédiaire. Il est juste nécessaire d'encastrer fixement par coulissement un manchon à l'intérieur d'un boîtier. L'encastrement suffit à réaliser le contact électrique par la réunion des plaques avec les lamelles correspondantes.

Pour rendre l'utilisation d'une telle enceinte électrique compatible avec n'importe quel type de prise électrique, il suffit juste d'encastrer dans un boîtier par coulissement et par emboîtement élastique un manchon réalisé avec des trous destinés à recevoir des fiches d'une prise électrique donnée.

L'invention a donc pour objet une enceinte électrique de contact comportant
- un boîtier muni d'un compartiment creux, le boîtier étant encastrable dans un trou d'une paroi, et
- un manchon de contact destiné à recevoir des fiches d'une prise électrique amovible, caractérisée en ce que le manchon de contact est de forme cylindrique et est encastré par coulissement à l'intérieur du compartiment du boîtier, le compartiment étant également de forme cylindrique en correspondance, l'encastrement du manchon dans le boîtier est fixe et est pourvu de moyens pour résister à une force d'arrachage d'une prise électrique.

L'invention a également pour objet une enceinte électrique de contact comportant
- un boîtier muni d'un compartiment creux, le boîtier étant encastrable dans un trou d'une paroi, et
- un manchon de contact destiné à former un interrupteur, caractérisée en ce que le manchon de contact est de forme cylindrique et est encastré par coulissement à l'intérieur du compartiment du boîtier, le compartiment étant également de forme cylindrique en correspondance, l'encastrement du manchon dans le boîtier est fixe et est pourvu de moyens pour résister à une force d'arrachage d'une prise électrique.

Pour faciliter le montage d'une telle enceinte électrique, l'invention comporte également un procédé de montage d'une enceinte électrique caractérisé en ce qu'il comporte les étapes suivantes :
- on insère un boîtier dans une paroi,
- on fait glisser trois fils électriques provenant de la paroi dans trois espaces de connexion d'un compartiment du boîtier par des orifices issus d'une face arrière du boîtier,
- on encastre un manchon par coulissement puis par emboîtement élastique à l'intérieur du boîtier, et on réalise une connexion électrique au cours de cet encastrement, et
- on fixe une plaque de recouvrement sur le boîtier.

L'invention sera mieux comprise à la lecture de la description qui suit et à l'examen des figures qui l'accompagne. Celles-ci ne sont présentées qu'à titre indicatif et nullement limitatif de l'invention. Les figures montrent :
- Figure 1 : une enceinte électrique de contact encastrable, selon l'invention ;
- Figure 2 : une vue en perspective d'un boîtier de l'enceinte électrique, selon l'invention ;
- Figure 3a : une coupe, transversale au sens d'insertion du manchon, d'une enceinte électrique selon l'invention ;
- Figure 3b : une coupe longitudinale d'un boîtier d'une enceinte électrique, selon l'invention;
- Figure 4 : une représentation schématique d'une insertion de fils électriques à l'intérieur d'un boîtier ;
- Figures 5a et 5b : des représentations schématiques d'une installation de fils électriques à l'intérieur d'un boîtier ;
- Figure 6 : une représentation schématique d'une variante d'une face d'une enceinte électrique destinée à s'encastrer dans une paroi, selon l'invention,
- Figure 7 : une représentation schématique d'une variante selon l'invention,
- Figure 8 une représentation schématique d'un boîtier muni de moyens de guidage, selon l'invention, et
- Figure 9 : une représentation schématique d'un boîtier muni de languettes de protection.

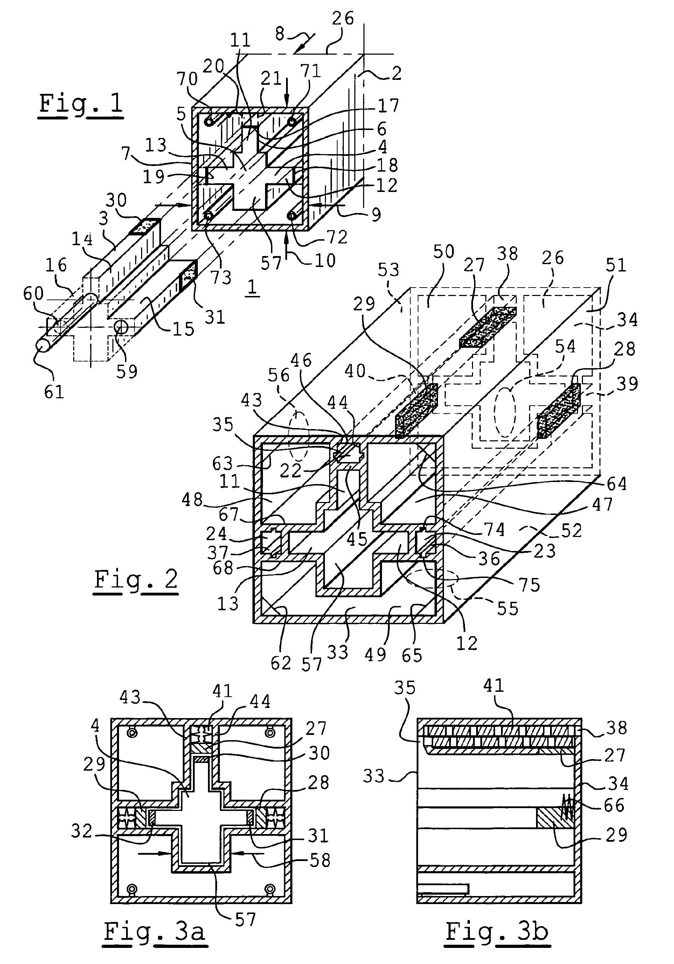

Une enceinte électrique de contact encastrable 1 comporte un boîtier 2 destiné à recevoir un manchon 3 de contact s'encastrant à l'intérieur du boîtier, selon l'invention, figure 1. Dans le dispositif de l'invention, on appelle enceinte l'ensemble d'un boîtier 2 et d'un manchon 3. Le boîtier 2 est destiné à être scellé définitivement dans la paroi, par exemple, par un scellement au plâtre. Le manchon 3 comporte des dispositifs de connexion électriques. Ces derniers permettent de relier électriquement des extrémités de fils électriques sortant de la paroi à l'endroit du trou où est logé l'enceinte à des bornes de fiches d'une prise électrique amovible, lesquelles fiches sont enfoncées temporairement dans le manchon.

Le boîtier a une forme avantageusement carrée épaufrée mais pourrait être cylindrique circulaire. La forme carrée permet d'encastrer correctement le boîtier 2 dans une réservation faîte à la main à l'aide d'un burin ou d'un marteau dans un matériaux dur. La forme carrée permet également de retirer assez facilement le boîtier 4 déjà encastré dans du plâtre par exemple en cassant le plâtre à l'aide d'un marteau ou d'un tournevis pour éventuellement replacer le boîtier à un autre endroit. La même méthode est utilisée pour y glisser un boîtier rond dans les mêmes matériaux.

Le boîtier 2 est muni d'un compartiment cylindrique 4 creux et de forme cylindrique, figure 1. Selon l'invention, le compartiment cylindrique 4 est centré à l'intérieur du boîtier et est de préférence en forme de T. Le compartiment cylindrique forme un volume central ou espace central 5. Le boîtier comporte également une périphérie interne 6 délimitée par l'espace central. Une périphérie externe 7 est délimitée par le boîtier lui-même. Le boîtier comporte une profondeur 8, une largeur 9 et une hauteur 10.

Selon l'invention, le manchon 3 s'encastre fixement à l'intérieur du boîtier par coulissement à l'intérieur du compartiment cylindrique 4. Pour encastrer fixement le manchon par coulissement à l'intérieur du compartiment cylindrique, le compartiment cylindrique 4 comporte le long de sa périphérie interne 6 trois cavités cylindriques 11, 12 et 13, figure 1. Le manchon 3 comporte en correspondance également trois protubérances cylindriques 14, 15 et 16. Les cavités cylindriques du compartiment cylindrique 4 sont creusées sur au moins une partie de la profondeur 8 du boîtier. Dans l'exemple préféré, le compartiment cylindrique 4 est creusé sur toute la profondeur 8 du boîtier, figures 1 et 2.

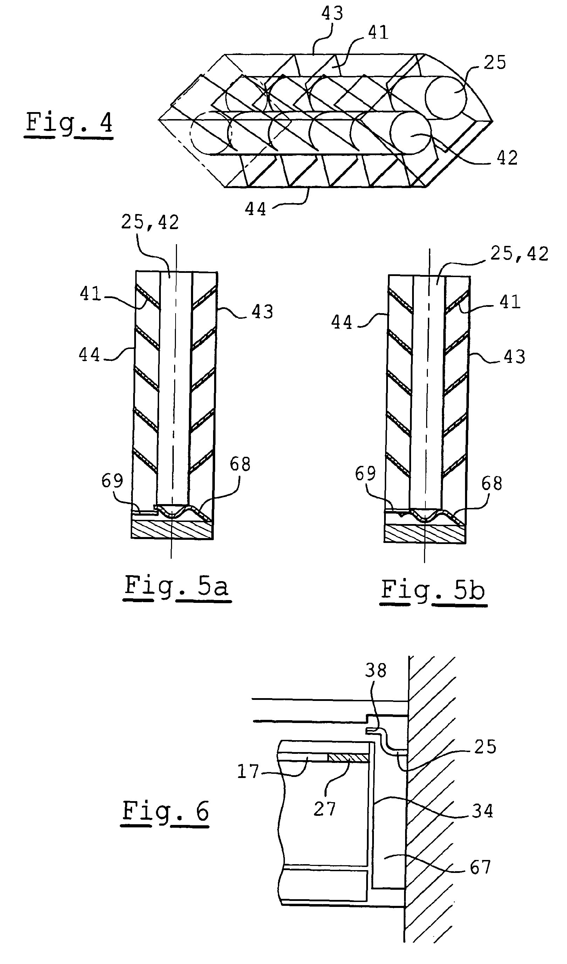

Chaque cavité cylindrique 11, 12 et 13 du compartiment cylindrique 4 est munie d'une cloison 17, 18 et 19, figure 1. Selon l'invention, le boîtier 2 comporte deux entretoises de liaison 20 et 21 reliant chacune les cloisons 17, 18 et 19 à la périphérie externe 7 du boîtier. Ces entretoises de liaison 20 et 21 permettent de délimiter un espace de connexion 22, 23 et 24 entre chacune des cloisons 17, 18 et 19 et la périphérie externe 7 du boîtier, figure 2. A l'intérieur de ces espaces de connexion 22, 23 et 24 est inséré au moins un fil électrique 25, figure 4.

Chacune des cloisons 17, 18 et 19 comporte une plaque 27, 28 et 29 conductrice d'électricité respectivement, lesquelles plaques sont situées à un endroit proche d'un fond 26 du boîtier, figure 2. Chacune des cloisons 17, 18 et 19 par l'intermédiaire des plaques forme une borne femelle, figure 1. Le manchon 3 comporte également en correspondance trois lamelles de contact 30, 31 et 32 destinées à venir en contact avec les plaques 27, 28 et 29. Ces lamelles forment des bornes mâles. La fixation de ces plaques 27, 28 et 29 peut s'effectuer en les enfonçant par une face avant 33 du boîtier dans les espaces de connexion 22, 23 et 24 respectivement de manière à les placer à un endroit proche d'une face arrière 34 du boîtier entre le fond 26 et les cloisons 17, 18 et 19.

Cependant, les espaces de connexion 22, 23, 24 peuvent être de dimensions relativement étroites pour réaliser des manipulations dans le but d'insérer les plaques conductrices d'électricité 27, 28 et 29. Dans une variante, pour faciliter le positionnement des plaques conductrices d'électricité dans le boîtier, il peut être prévu d'abord de fabriquer le compartiment cylindrique 4, puis de placer une plaque conductrice d'électricité ou un connecteur électrique sur chacune des cloisons 17, 18 et 19 à un endroit destiné à être proche d'une face arrière 34 du boîtier et ensuite de fixer le compartiment cylindrique muni de ces connecteurs sur le fond 26 du boîtier.

Le boîtier comporte une face avant 33 dont le plan est perpendiculaire au sens d'insertion du manchon 3 à l'intérieur du boîtier, figures 2 et 3b. Le boîtier comporte une face arrière 34 dont le plan est parallèle au plan de la face avant 33. La face arrière 34 est destinée à être au contact de la paroi et la face avant 33 est destinée à être éloignée de la paroi. Selon l'invention, le boîtier comporte à l'intérieur des espaces de connexion 22, 23 et 24 des orifices 35, 36 et 37 sur la face avant 33 et des orifices 38, 39 et 40 sur la face arrière 34 du boîtier. Ces orifices sont réalisés de telle manière qu'ils possèdent une taille admettant le passage d'un seul fil électrique 25 ou de plusieurs fils électriques 25. Ces orifices sont également réalisés de préférence de telle manière que des fils électriques insérés par ces orifices puissent se chevaucher parallèlement l'un à l'autre à l'intérieur de ces espaces de connexion 22, 23 et 24.

Le fil électrique 25 est enveloppé d'une gaine de protection (non représentée). Pour être en contact avec les plaques 27, 28 et 29, le fil électrique est au moins partiellement dénudé. Dans ce but, des ailettes 41, figures 3a, 3b, 4 et 5 sont présentes à l'intérieur des espaces de connexion 22, 23 et 24. La figure 4 représente deux fils électriques 25 et 42 dénudés par des ailettes 41. Chaque espace de connexion possède quatre faces internes 43, 44, 45 et 46, figure 2. Chacune de ces quatre faces 43, 44, 45 et 46 est disposée respectivement sur l'entretoises de liaison 20, sur l'entretoises de liaison 21, sur l'une des cloisons 17, 18 ou 19, et sur la périphérie externe 7 du boîtier. Deux de ces quatre faces internes sont munies d'ailettes. Les ailettes 41 sont tranchantes et sont insérées sur deux faces internes opposées. Par exemple, les deux faces internes peuvent être les faces 43 et 44 situées sur les entretoises de liaison 20, 21 à l'intérieur des espaces de connexion 22, 23 et 24, figures 2, 5a et 5b.

Les ailettes 41 sont inclinables. Elles sont réalisées de telle manière qu'elles sont susceptibles de trancher la gaine de protection entourant le fil électrique pour être en contact avec le fil électrique.

Elles s'inclinent dans le sens d'insertion du fil électrique autour d'un axe perpendiculaire au sens d'insertion du fil électrique. Les ailettes peuvent s'incliner de manière à ce qu'elles s'inclinent par rapport aux faces 43 et 44, figure 4. Ainsi, après avoir inséré le fil électrique à l'intérieur de l'espace de connexion 22, 23 ou 24, il suffira de tirer perpendiculairement et dans le sens opposé au sens d'insertion du fil électrique pour que les ailettes 41 arrachent une partie de la gaine protectrice de ce même fil électrique. Le fil électrique au moins partiellement dénudé peut alors être directement en contact avec la plaque 27, 28 et 29.

Si au cours du montage d'une telle enceinte électrique selon l'invention, un fil électrique n'est pas placé dans l'espace de connexion approprié, il est possible de retirer le fil électrique de cet espace de connexion sans que les ailettes ne tranchent le fil électrique. Pour se faire, du fait que les ailettes sont inclinables, on peut prévoir un dispositif (non représenté) reliant les ailettes. Ce dispositif comporte un crochet (non représenté) réalisé de telle manière que par le déplacement de ce crochet, les ailettes se rabattent en direction du sens d'insertion du fil électrique vers la face d'insertion des ailettes.

Dans une variante, les ailettes peuvent également être conductrices de l'électricité et être reliées aux plaques 27, 28 et 29 de telle manière que lorsque les ailettes tranchent la gaine protectrice du fil électrique, elles permettent le contact indirectement du fil électrique avec les plaques.

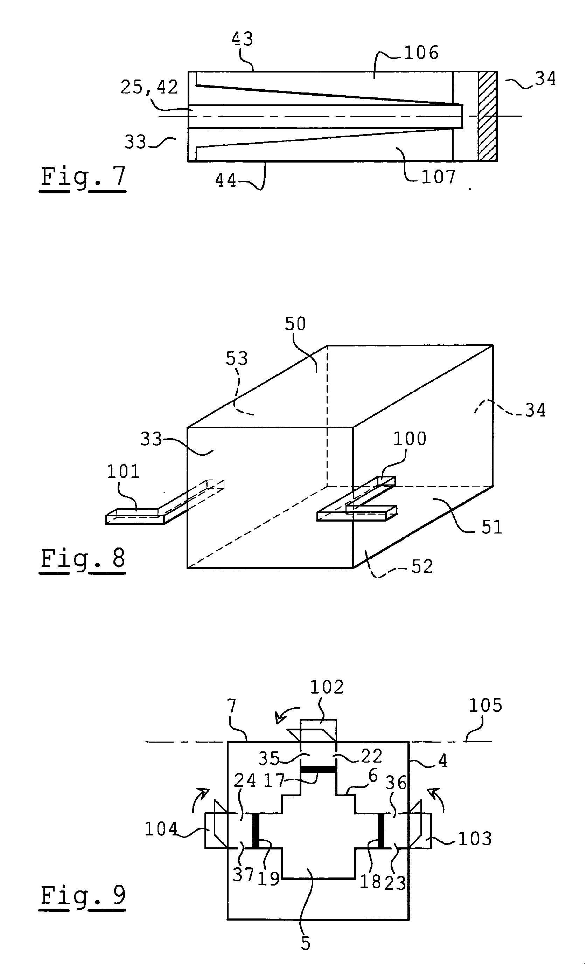

Dans une autre variante, les ailettes présentes sur les faces d'insertion 43 et 44 peuvent former une lame tranchante 106 et 107 respectivement, figure 7. Plusieurs lames peuvent être présentes. Par exemple, une lame peut être placée à chaque coins formés par les faces 43 et 45, les faces 45 et 44, les faces 44 et 46, et les faces 46 et 43. Ces lames peuvent être insérées selon un axe longitudinal par rapport au sens d'insertion du fil électrique. Chacune des lames s'élargis depuis la face avant 33 jusqu'à la face arrière 34 de telle manière que la gaine protectrice du fil électrique est tranchée jusqu'au fil électrique proprement dit à un endroit des lames proche de la face arrière 34, lequel endroit correspond à un endroit où les lames sont les plus élargies.

Selon l'invention, le boîtier est creusé d'au moins un espace 47 contournant partiellement le compartiment cylindrique 4, figure 2. Cet espace 47 est creusé sur au moins une partie de la profondeur 8 du boîtier. Dans un exemple, le boîtier 2 comporte trois espaces 47, 48 et 49. Ces espaces sont creusés sur toute la profondeur 8 du boîtier. Le boîtier 2 comporte quatre côtés 50, 51, 52 et 53, figure 2, de largeur 9 et de profondeur 8. Les quatre côtés possèdent chacun un plan perpendiculaire aux faces 33 et 34. Chacun de ces côtés peut être muni d'au moins un passage prédécoupé 54. Trois passages prédécoupés 54, 55 et 56 sont représentés figure 2 sur les côtés 51, 52, 53 respectivement. Ces passages prédécoupés possèdent une forme circulaire mais pourraient être de forme rectangulaire. Ces passages prédécoupés sont réalisés de telle manière qu'ils permettent l'admission d'au moins trois fils électriques. Ces passages prédécoupés 54, 55 et 55 sont disposés dans un endroit du boîtier 2 de telle manière qu'ils débouchent dans l'espace 47, 48 et 49, figure 2.

Dans un exemple, les côtés 50, 51, 52 et 53 peuvent mesurer 45 millimètres de largeur 9 et 41 millimètres de profondeur 8. Le boîtier peut également comporter sur la périphérie externe 7 des aspérités en relief (non illustrées) afin d'offrir à une mousse expansive ou autres liants colles, une bonne adhérence pour un scellement du boîtier dans la paroi. Dans un exemple, les côtés peuvent comporter des glissières (non représentées). Ces glissières sont des rails. Ces glissières permettront non seulement de créer des aspérités pour une meilleure adhérence à la paroi mais également, ces glissières permettront de combiner par simple glissement sur les rails les boîtiers entre eux. Par simple glissement, plusieurs enceintes électriques selon l'invention pourront donc être aligner horizontalement ou verticalement par rapport à un plan perpendiculaire au plan de la paroi lors de différentes combinaisons, sans gêner un recouvrement par une plaque ou enjoliveur (non représenté) des enceintes.

Pour insérer un manchon 3 destiné à recevoir une prise électrique ou un manchon comportant un mécanisme d'interrupteur, le compartiment cylindrique 4 comporte une extension 57 servant de détrompage. Cette extension 57 est creusée à partir de l'espace central 5 et est placée à la périphérie interne 6 du compartiment cylindrique 4. De préférence cette extension 57 possède selon une section transversale du boîtier, figure 3a, une forme rectangulaire d'une longueur 58 de 10 ou 12 millimètres s'étendant sur toute une profondeur 8 du boîtier. Cependant, cette extension 57 pourrait avoir une autre forme. La longueur 58 est variable et est fonction du type d'enceinte choisie. Dans un exemple, l'extension 57 aura une longueur 58 de 10 millimètres pour le montage d'une enceinte destinée à recevoir une prise électrique. Dans un autre exemple, l'extension 57 possédera une longueur 58 de 12 millimètres pour l'installation d'un interrupteur.

Le manchon 3 possède une forme légèrement inférieure à la forme du compartiment 4 et de même profondeur 8. Dans le cas d'une enceinte électrique destinée à recevoir une prise électrique, figure 1, le manchon 3 comporte deux trous 59 et 60 et une excroissance 61 de forme allongée correspondant à une masse. Les trois lamelles 30, 31 et 32 du manchon sont disposées respectivement sur une paroi du trou 59, sur une paroi du trou 60 et sur l'excroissance 61 correspondant à la masse. Chacun des trous 59 et 60 est destiné à recevoir une fiche d'une prise électrique amovible (non représentée). Les trois lamelles 30, 31 et 32 du manchon 3 correspondant aux trois bornes mâles sont disposées de telle manière qu'elles sont situées face aux trois plaques 27, 28 et 29 correspondant aux trois bornes femelles du boîtier lors de l'insertion du manchon 3 à l'intérieur du compartiment 4 du boîtier 2.

Pour consolider le boîtier 2, le boîtier comporte au moins un renfort 62 reliant deux côtés du boîtier. Dans un exemple figure 2, le boîtier comporte quatre renforts 62, 63, 64 et 65.

L'insertion du manchon 3 à l'intérieur du compartiment 4 est réalisée par emboîtement élastique ou clipsage. On entend par emboîtement élastique le fait d'insérer le manchon 3 par coulissement à l'intérieur du compartiment 4 puis à maintenir fixement ce manchon 3 à l'intérieur du compartiment 4. Ce manchon 3 put être maintenu fixement à l'intérieur du compartiment 4 par l'intermédiaire de moyens de fixation. Ces moyens de fixation peuvent être des petites protubérances formées sur un pourtour du manchon et lesquelles protubérances sont destinées à venir coopérer avec une gorge creusée en correspondance sur la paroi interne 6 du boîtier.

Il peut être prévu d'encastrer fixement le manchon 3 par coulissement du manchon à l'intérieur du compartiment 4 en prévoyant que le manchon reste encastré fixement à l'intérieur du compartiment 4 pour une force d'arrachage du manchon supérieure à une autre force à l'arrachage d'une prise électrique. Dans un exemple, une force à l'arrachage du manchon selon l'invention peut être prévue pour une force supérieure à 20 kilogrammes alors qu'une force à l'arrachage d'une prise électrique est habituellement prévue pour une force à l'arrachage de 5 kilogrammes environs. Les moyens de fixation peuvent être réalisés de telle manière qu'ils coopèrent les uns avec les autres au moins jusqu'à une force qui résiste à un arrachage d'une force de 20 kilogrammes. Ainsi, la force avec laquelle on retire une prise électrique de l'enceinte électrique selon l'invention ne risque pas d'arracher le manchon de son logement.

Un ressort 66 figure 3b est disposé dans le fond 26 du boîtier de manière à favoriser le retirage du manchon lors du démontage d'une telle enceinte selon l'invention.

Dans une variante, figure 6, la face 34 peut ne pas être plate. Elle peut être creusée d'un renfoncement 67 pour faciliter l'insertion de fils électriques dans le boîtier. De cette manière, les fils électriques provenant de la paroi pourront se plier librement dans le renfoncement 67 pour s'insérer correctement dans le boîtier.

Le procédé de montage d'une enceinte électrique destinée à recevoir une prise électrique est réalisé de la manière suivante. La paroi est creusée d'un trou à l'aide d'une scie cloche. Ce trou est réalisé de telle manière qu'il admette l'insertion de l'enceinte électrique encastrable selon l'invention. Le boîtier est d'abord inséré dans le trou de cette paroi. Des fils électriques issus de ce trou sont alors placés dans le renfoncement 67 et insérés dans le boîtier en passant par les orifices 38, 39 et 40 présents sur la face arrière 34. Les fils électriques pourraient également pénétrer par la face avant 33 du boîtier en passant par les passages prédécoupés 54, 55 et 56.

Les fils électriques 25 sont glissés manuellement à l'intérieur de l'espace de chaque espace de connexion 22, 23 et 24. Une simple poussée par la force du doigt est suffisant pour forcer l'insertion de ces fils à l'intérieur des espaces de connexion et pour aplatir les ailettes 41. La force des doigts et la présence des ailettes dans les espaces de connexion suffit à positionner le fil correctement en face d'une plaque 27, 28 et 29. L'insertion complète du fil est assurée lorsque le fil électrique a pu déplacer une tige souple 68 fixée sur une des deux faces internes 43 ou 44 à l'intérieur des espaces de connexion 22, 23 et 24 et placée à un endroit le plus proche de l'orifice 38, 39 ou 40 et/ou à un endroit le plus proche de l'orifice 35, 36 et 37 suivant l'insertion du fil électrique 25 par la face arrière 34 ou par la face avant 33. En se déplaçant, la tige souple 68 a pu se glisser sous une tige rigide 69 fixée sur une face opposée à la précédente 43 ou 44. Dans un exemple, la tige souple 68 est fixée à la face 43 et la tige rigide 69 est fixée à la face 44, figures 5a et 5b. Le glissement de la tige souple 68 vers un autre côté de la tige rigide 69 est perçu par un signal sonore.

Puis, on retire légèrement le fil dans une direction opposée au sens d'insertion des fils de manière à ce que les ailettes 41 puissent tendre à se positionner perpendiculairement par rapport à leur site de fixation pour trancher la gaine protectrice. En tranchant la gaine, le fil électrique au moins légèrement dénudé peut être directement en contact avec une plaque 27, 28 ou 29 ou indirectement par l'intermédiaire des ailettes.

Puis le manchon 3 est encastré fixement par coulissement à l'intérieur du compartiment 4. Il est fixé par emboîtement élastique ou clipsage. La connexion électrique est réalisée en rapprochant les plaques 27, 28 et 29 ou les connecteurs correspondant aux bornes femelles directement en contact avec les fils électriques avec les lamelles 30, 31 et 32 correspondant aux bornes mâles destinées à être directement en contact avec les fiches de la prise électrique.

Le clipsage présente l'avantage de pouvoir retirer le manchon relativement facilement. Le manchon 3 pourra être retiré en le tirant à la main selon une direction perpendiculaire et opposée à la paroi. Comme précédemment mentionné, une force à l'arrachage du manchon d'une telle enceinte destinée à recevoir une prise électrique pourra être prévue pour une force supérieure ou égale à 20 kilogrammes.

Pour empêcher un éventuelle arrachage du manchon dans une direction opposée de l'endroit où est inséré le manchon, l'enceinte 1 peut ensuite être fermée par une plaque de recouvrement (non représentée). Cette plaque de recouvrement est réalisée de telle manière qu'elle se positionne en recouvrant partiellement le manchon et en recouvrant le reste du boîtier. Cette plaque de recouvrement recouvre partiellement le manchon de telle manière que les tous 59, 60 et l'excroissance 61 sont accessibles à une prise électrique. Cette plaque de recouvrement est fixée à l'aide d'au moins un ergot mâle (non représenté). L'ergot mâle est inséré à l'intérieur d'une cavité 70 par emboîtement élastique. Dans ce but, l'ergot mâle coopère avec la cavité creusée dans le boîtier de telle manière que l'ergot mâle comporte une forme complémentaire à la forme de la cavité. L'ergot mâle peut être inséré manuellement dans la cavité par encastrement sans avoir besoin d'outils comme par exemple un tournevis. Comme pour le manchon 3 s'encastrant à l'intérieur du compartiment 4, on peut prévoir une force à l'arrachage de la plaque de recouvrement pour une force supérieure ou égale à 20 kilogrammes. Dans un exemple, figure 1, le boîtier comporte quatre cavités 70, 71, 72 et 73 présents à quatre coins du boîtier 2.

Le procédé de montage d'un pont électrique pour relier deux enceintes électriques est réalisé de la manière suivante. Le montage d'une première enceinte est d'abord réalisée comme décrit précédemment. Après avoir inséré le premier fil provenant de la face arrière 34 ou de la face avant 33 du boîtier dans chacun des espaces de connexion 22, 23 et 24, un second fil est inséré par la face avant 33 du boîtier dans ces mêmes espaces de connexion. Cet autre fil est positionné de la même manière à l'intérieur de l'espace de connexion 22, 23 ou 24 par l'orifice 35, 36 ou 37 sur la face 33. A l'intérieur de ces espaces de connexion, les fils se chevauchent alors de manière à être en contact. Les fils électriques s'insérant par la face avant 33 du boîtier sont ensuite dirigés vers l'extérieur du boîtier. Les fils sortent de l'extrémité par les orifices 35, 36, ou 37 puis passent à travers des tranchées 74 et 75 prévues à cet effet, figure 2. Les tranchées ont une taille suffisamment large pour faire glisser trois fils électriques. Ces tranchées sont creusées dans les entretoises de liaison 20 et 21 à un endroit proche de la face avant 33 du boîtier à l'endroit où se situe les espaces de connexion 22, 23, 24, entre la périphérie externe 7 du boîtier et la cloison 17, 18 et 19.

Puis chaque fils sort du boîtier par le passage prédécoupé 54, 55 et 56. Chacun des fils ou tous les fils à la fois peuvent être réunis de manière à passer dans un seul passage prédécoupé. Dans un exemple figure 1, les fils électriques peuvent sortir par les passages 54, 55 et 56 situés sur les côtés 51, 52 et 53 respectivement. Les fils sortant de la première enceinte peuvent alors rejoindre une deuxième enceinte et s'insérer dans chaque espace de connexion prévu à cet effet sur l'une ou l'autre face 33 et 34.

Pour l'installation d'une enceinte électrique pour un interrupteur, des fils électriques sont installés à l'intérieur du boîtier 2 comme précédemment décrit. Puis on insère le manchon 3 à l'intérieur de ce compartiment cylindrique 4. Ce manchon dans ce cas précis comporte le mécanisme d'interrupteur réalisant sur commande la mise en contact des fils entre eux en appuyant sur une manette.

Ainsi, pour adapter une prise électrique donnée à une enceinte électrique universelle, il suffira alors de démonter l'enceinte. Le démontage d'une telle enceinte électrique consistera à retirer la plaque de recouvrement du boîtier et à retirer le manchon du compartiment cylindrique du boîtier, par arrachage selon un axe perpendiculaire au plan de la paroi, pour y insérer par emboîtement élastique un autre manchon correspondant à une prise électrique souhaitée.

L'enceinte électrique peut comporter des moyens de guidage 100, 101, figure 8. Ces moyens de guidage 100, 101 peuvent être prévus pour orienter l'enceinte électrique par rapport à un plan formé par le sol. De préférence, ces moyens de guidage permettent d'orienter l'enceinte avec deux côtés opposés du boîtier formant chacun un plan perpendiculaire au plan formé par le sol. Ces moyens de guidage sont situés sur le boîtier et sont réalisés de telle manière qu'ils sont cassables après fixation au plâtre de l'enceinte dans le trou. Ces moyens de guidage permettent d'orienter l'enceinte lorsque le plâtre permettant de fixer l'enceinte dans le trou n'est pas encore sec. Lorsque le plâtre est sec et que l'enceinte est positionnée selon un emplacement souhaité par rapport au plan formé par le sol, il suffit alors de casser ces moyens de guidage à l'aide d'un marteau ou d'un tournevis.

Ces moyens de guidage peuvent être un premier bras de guidage 100 et un deuxième bras de guidage 101, figure 8. Ces bras de guidage peuvent être fixés sur un premier côté et sur un deuxième côté du boîtier. De préférence, ces bras de guidage 100 et 101 sont fixés sur deux côtés opposés. Dans l'exemple figure 8, le premier bras de guidage 100 et le deuxième bras de guidage 101 sont fixés respectivement sur le côté 51 et sur le côté 53 du boîtier 2. Ces bras de guidage forment un angle droit leur permettant de s'appuyer et de se caler contre la paroi à proximité du trou creusé dans la paroi. Les bras de guidage sont fixés de préférence à une partie centrale du boîtier puis s'étendent à partir du côté correspondant du boîtier en direction opposée au boîtier et selon une direction perpendiculaire à un plan formé par le côté 51 et le côté 53. Ces bras sont fixés sur un côté du boîtier tout en s'étendant et en débordant de la face avant 33 de telle manière que la face avant 33 forme une surface plane en continuité avec un plan formé par la paroi une fois l'enceinte placée dans le trou. Une règle à niveau peut alors être positionnée selon un axe sur lequel sont positionnés les deux bras de guidage pour permettre de régler l'orientation de l'enceinte selon l'axe sur lequel sont situés les deux bras parallèle au plan formé par le sol.

Pour protéger les fils électriques, des languettes de protection inclinables 102, 103 et 104 peuvent également être placées sur le boîtier 2 destinées à obturer les orifices 35, 36 et 37 respectivement des espaces de connexion 22, 23 et 24 une fois que les fils électriques y sont insérés, figure 9. Ces languettes sont fixées sur la face avant 33 du boîtier à proximité des orifices 35, 36 et 37. Dans l'exemple figure 9, les languettes sont fixées sur le pourtour externe 7 du boîtier. Mais les languettes pourraient être placées sur le pourtour interne 6 ou sur l'une des entretoises 20, 21. Ces languettes sont destinées à se rabattre (comme représenté par une flèche figure 9) tout en s'inclinant autour d'un axe 105, lequel axe 105 est formé le long d'une arrête du boîtier.

## Revendications

1. - Enceinte électrique (1) de contact comportant
- un boîtier (2) muni d'un compartiment (4) creux, le boîtier étant encastrable dans un trou d'une paroi, et
- un manchon (3) de contact destiné à recevoir des fiches d'une prise électrique amovible, **caractérisée en ce que**
- le manchon (3) de contact comporte des lamelles conductrices d'électricité (30,31), le manchon est de forme cylindrique et est encastré par coulissement à l'intérieur du compartiment du boîtier, le compartiment étant également de forme cylindrique en correspondance, l'encastrement du manchon dans le boîtier est fixe et est pourvu de moyens pour résister à une force d'arrachage d'une prise électrique,
- des fils électriques sont insérés dans des espaces de connexion pour être mis en contact avec des plaques conductrices (27,28,29), chaque espace de connexion étant délimité par une cloison du compartiment cylindrique et par une paroi externe du boîtier, chacune des plaques étant formée par une cloison,
- le manchon est encastré par coulissement en correspondance et en appui contre les cloisons, et les lamelles du manchon étant situées face et en contact avec les plaques du boîtier lors de l'insertion.

2. - Enceinte électrique (1) de contact comportant
- un boîtier (2) muni d'un compartiment (4) creux, le boîtier étant encastrable dans un trou d'une paroi, et
- un manchon (3) de contact destiné à former un interrupteur, **caractérisée en ce que**
- le manchon de contact comporte des lamelles conductrices d'électricité (30,31), le manchon est de forme cylindrique et est encastré par coulissement à l'intérieur du compartiment du boîtier, le compartiment étant également de forme cylindrique en correspondance, l'encastrement du manchon dans le boîtier est fixe et est pourvu de moyens pour résister à une force d'arrachage d'une prise électrique,
- les fils électriques sont insérés dans des espaces de connexion pour être mis en contact avec des plaques conductrices, chaque espace de connexion étant délimité par une cloison du compartiment cylindrique et par une paroi externe du boîtier, chacune des plaques étant formée par une cloison,
- le manchon est encastré par coulissement en correspondance et en appui contre les cloisons, et les lamelles du manchon étant situées face et en contact avec les plaques du boîtier lors de l'insertion.

3. - Enceinte électrique (1) selon l'une des revendications 1 à 2, **caractérisée en ce que** le compartiment cylindrique (4) est centré à l'intérieur du boîtier.

4. - Enceinte électrique (1) selon la revendication 3 **caractérisé en ce que** le compartiment cylindrique est en forme de T.

5. - Enceinte électrique (1) selon l'une des revendications 1 à 4, **caractérisée en ce que** le compartiment cylindrique comporte une extension (57) servant de détrompage à une périphérie interne (6) du compartiment cylindrique, de préférence l'extension possède, selon une section transversale du boîtier, une forme rectangulaire d'une longueur (58) de 10 ou 12 millimètres s'étendant sur toute une profondeur (8) du boîtier.

6. - Enceinte électrique (1) selon l'une des revendications 1 à 5, **caractérisée en ce que** le compartiment cylindrique (4) comporte trois cavités cylindriques communiquantes (11, 12, 13) munie chacune d'une partie (17, 18, 19) délimitant un espace de connexion (22, 23, 24) destiné à recevoir des extrémités de fils électriques, séparé d'un espace principal (5) destiné à recevoir le manchon, le manchon comportant en correspondance de ces parties trois protubérances cylindriques (14, 15, 16).

7. - Enceinte électrique (1) selon la revendication 6, **caractérisée en ce qu'**une partie de la cloison (17, 18, 19) est formée d'une plaque conductrice d'électricité (27, 28, 29), le manchon comportant en correspondance trois lamelles de contact (30, 31, 32) destinées à venir en contact avec les plaques.

8. - Enceinte électrique (1) selon l'une des revendications 6 à 7, **caractérisée en ce que** le boîtier comporte dans les espaces de connexion des orifices (35, 36, 37) sur une face avant (33) et des orifices (38, 39, 40) sur une face arrière (34) du boîtier, ces orifices étant d'une taille admettant un passage d'un seul fil électrique (25) et étant de préférence tels que des fils électriques insérés par ces orifices puissent se chevaucher parallèlement l'un à l'autre à l'intérieur de ces espaces de connexion.

9. - Enceinte électrique (1) selon l'une des revendications 6 à 8, **caractérisée en ce que** les espaces de connexion sont munis d'ailettes (41) insérées sur deux faces internes opposées (43, 44), ces ailettes étant inclinables et inclinées par rapport à un sens d'insertion d'un fil électrique.

10. - Enceinte électrique selon l'une des revendications 1 à 9, **caractérisée en ce que** le boîtier est creusé d'au moins un espace (47, 48, 49) contournant partiellement le compartiment cylindrique (4), de préférence muni chacun d'au moins un passage prédécoupé (54, 55, 56).

11. - Enceinte électrique selon l'une des revendications 1 à 10, **caractérisée en ce que** le boîtier comporte des entretoises de liaison (20, 21) de cloisons (17, 18, 19) au boîtier, ces entretoises délimitant un espace de connexion pour maintenir des plaques conductrices d'électricité et comportant des tranchées (74, 75) pour faire glisser des fils électriques.

12. - Procédé de montage d'une enceinte électrique comportant l'étape de:
- on insère un boîtier (2) dans une paroi, **caractérisé en ce qu'**il comporte les étapes suivantes :
- on fait glisser des fils électriques provenant de la paroi dans des espaces de connexion (22, 23, 24) d'un compartiment (4) du boîtier par des orifices (38, 39, 40) issus d'une face arrière (34) du boîtier jusqu'à ce que les fils soient au contact de plaques conductrices d'électricité (27,28,29),
- on encastre un manchon (3) par coulissement puis par emboîtement élastique à l'intérieur du boîtier, et on réalise une connexion électrique au cours de cet encastrement par contact de lamelles conductrices d'électricité (30,31) formées par le manchon avec les plaques du boîtier, et
- on fixe une plaque de recouvrement sur le boîtier.

13. - Procédé de montage selon la revendication 12, **caractérisé en ce que**
- on insère d'autres fils dans chacun des espaces de connexion (22, 23, 24) par des orifices (35, 36, 37) issu d'une face avant (33) du boîtier, et
- on fait sortir ces autres fils du boîtier par des passages prédécoupés (54, 55, 56) du boîtier.

14. - Procédé d'utilisation d'une enceinte électrique (1) selon les revendications 1 et 2 **caractérisé en ce que**
- on retire le manchon destiné à recevoir des fiches d'une prise électrique amovible et on le remplace par le manchon destiné à former un interrupteur ou réciproquement.

15. - Enceinte selon l'une de revendications 1 à 14 **caractérisée en ce qu'**elle comporte des moyens de guidage et d'orientation (100, 101) par rapport à un plan formé par le sol.

16. - Enceinte selon l'une des revendications 1 à 15 **caractérisée en ce qu'**elle comporte des languettes de protection inclinables (102, 103, 104) autour d'un axe (105) formé le long d'une arrête du boîtier, chacune des languettes étant destinées à obturer un orifice (35, 36 et 37) d'une face avant (33) du boîtier, orifice (35, 36 et 37) par l'intermédiaire duquel est destiné à s'insérer au moins un fil électrique 25.

## Claims

1. An electric contact enclosure (1) comprising
- a housing (2) equipped with a hollow compartment (4), the housing being embeddable in a hole of a wall, and
- a contact sleeve (3) intended to receive plugs of a detachable electric connector, **characterized in that**
- the contact sleeve (3) comprises electrically conductive strips (30, 31), the sleeve is in the shape of a cylinder and is embedded by sliding inside the housing compartment, the compartment is also correspondingly in a cylindrical shape, the embedding of the sleeve in the housing is fixed and is provided with means to withstand a pulling force from an electric connector,
- the electric wires are inserted in the connection spaces to be put in contact with conductive plates (27, 28, 29), each connection space being defined by a partition of the cylindrical compartment and by an external wall of the housing, each of the plates being formed by a partition,
- the sleeve is embedded by correspondingly sliding and pressing against the partitions, and the strips of the sleeves are situated facing and in contact with the plates of the housing during insertion.

2. An electric contact enclosure (1) comprising
- a housing (2) equipped with a hollow compartment (4), the housing being embedded in a hole of a wall, and
- a contact sleeve (3) intended to form a switch, **characterized in that**
- the contact sleeve comprises electrically conductive strips (30, 31), the sleeve is in a cylindrical shape and is embedded by sliding inside the compartment of the housing, the compartment also correspondingly is in a cylindrical shape, the embedding of the sleeve in the housing is fixed and is equipped with means to withstand a pulling force from an electric connector,
- the electric wires are inserted in connection spaces to be put in contact with the conductive plates, each connection space being defined by a partition of the cylindrical compartment and by an external wall of the housing, each of the plates being formed by a partition,
- the sleeve is embedded by correspondingly sliding and pressing against the partitions, and the strips of the sleeve are situated facing and in contact with the plates of the housing during insertion.

3. The electric enclosure (1) according to one of claims 1 to 2, **characterized in that** the cylindrical compartment (4) is centered inside the housing.

4. The electric enclosure (1) according to claim 3, **characterized in that** the cylindrical compartment is T-shaped.

5. The electric enclosure (1) according to one of claims 1 to 4, **characterized in that** the cylindrical compartment comprises an extension (57) used as a keyway at an internal periphery (6) of the cylindrical compartment, the extension preferably has, along a cross-section of the housing, a rectangular shape with a length (58) of 10 or 12 millimeters extending throughout a depth (8) of the housing.

6. The electric enclosure (1) according to one of claims 1 to 5, **characterized in that** the cylindrical compartment (4) has three communicating cylindrical cavities (11, 12, 13), each equipped with a part (17, 18, 19) defining a connection space (22, 23, 24) intended to receive the ends of the electric wires, separated by a main space (5) intended to receive the sleeve, the sleeve correspondingly comprising these three cylindrical protruding parts (14, 15, 16).

7. The electric enclosure (1) according to claim 6, **characterized in that** a part of the partition (17, 18, 19) is formed from an electrically conductive plate (27, 28, 29), the sleeve correspondingly comprising three contact strips (30, 31, 32) intended to come in contact with the plates.

8. The electric enclosure (1) according to one of claims 6 to 7, **characterized in that** the housing comprises, in the connection spaces, openings (35, 36, 37) on a front face (33) and openings (38, 39, 40) on a rear face (34) of the housing, these openings having a size that allows passage of a single electric wire (25) and preferably being such that the electric wires inserted through these openings may overlap parallel to each other inside these connection spaces.

9. The electric enclosure (1) according to one of claims 6 to 8, **characterized in that** the connection spaces are equipped with fins (41) inserted on two internal opposite faces (43, 44), these fins being tilting and tilted with relation to a direction of insertion of an electric wire.

10. The electric enclosure (1) according to one of claims 1 to 9, **characterized in that** the housing is hollowed with at least one space (47, 48, 49) partially extending around the cylindrical compartment (4), each preferably equipped with at least one precut passage (54, 55, 56).

11. The electric enclosure (1) according to one of claims 1 to 10, **characterized in that** the housing comprises tie-ends (20, 21) for connecting partitions (17, 18, 19) to the housing, these tie-ends define a connection space to maintain the electrically conductive plates and comprise grooves (74, 75) to cause the electric wires to slide.

12. A method for mounting an electric enclosure comprising the step of:
- inserting a housing (2) in a wall, **characterized in that** the method comprises the following steps:
- the electric wires from the wall are caused to slide in the connection spaces (22, 23, 24) of a compartment (4) of the housing by openings (38, 39, 40) issued from a rear face (34) of the housing until the wires are in contact with the electrically conductive plates (27, 28, 29).
- a sleeve (3) is embedded by sliding then by elastic fitting inside the housing, and an electrical connection is made during this embedding by contact of electrically conductive strips (30, 31) formed by the sleeve with the housing plates, and
- a covering plate is fixed on the housing.

13. The mounting method according to claim 12, **characterized in that**
- other wires are inserted in each of the connection spaces (22, 23, 24) through openings (35, 36, 37) issued from a front face (33) of the housing, and
- these other wires are caused to exit from the housing by passages (54, 55, 56) precut from the housing.

14. A method for using an electric enclosure (1) according to claims 1 and 2, **characterized in that**
- the sleeve intended to receive plugs of a detachable electric connector is removed and replaced with the sleeve intended to form a switch, or conversely.

15. The enclosure according to one of claims 1 to 14, **characterized in that** the enclosure comprises means for guiding and orienting (100, 101) with relation to a plane formed by the ground.

16. The enclosure according to one of claims 1 to 15, **characterized in that** the enclosure comprises tilting protection tabs (102, 103, 104) around an axis (105) formed along a ridge of the housing, each of the tabs being intended to block an opening (35, 36 and 37) of a front face (33) of the housing, an opening (35, 36 and 37) through which at least one electric wire 25 is intended to be inserted.

## Patentansprüche

1. Elektrischer Kontakteinschluss (1), der Folgendes aufweist
- ein Gehäuse (2), das mit einem Hohlfach (4) versehen ist, wobei das Gehäuse in eine Öffnung in einer Wand eingelassen werden kann, und
- eine Kontakthülse (3), die dazu bestimmt ist, die Kontakte einer abnehmbaren Stromsteckdose aufzunehmen, **dadurch gekennzeichnet,**
- **dass** die Kontakthülse (3) Strom leitende Lamellen (30, 31) aufweist, dass die Hülse zylindrisch und durch Gleiten im Inneren des Fachs des Gehäuses eingelassen ist, wobei das Fach ebenfalls entsprechend zylindrische Form hat, wobei das Einlassen der Hülse in das Gehäuse stationär ist, und mit Mitteln versehen ist, um einer Abreißkraft einer Stromsteckdose standzuhalten,
- **dass** elektrische Leiter in Anschlussräume eingefügt werden, um mit leitenden Platten (27, 28, 29) in Berührung gebracht zu werden, wobei jeder Anschlussraum durch eine Wand des zylindrischen Fachs und durch eine Außenwand des Gehäuses abgegrenzt ist, wobei jede der Platten von einer Wand gebildet ist,
- **dass** die Hülse durch bündiges Gleiten eingelassen ist und gegen die Wände anliegt, und dass die Lamellen der Hülse den Platten des Gehäuses beim Einfügen gegenüberliegen und damit in Berührung sind.

2. Elektrischer Kontakteinschluss (1), der Folgendes aufweist
- ein Gehäuse (2), das mit einem Hohlfach (4) versehen ist, wobei das Gehäuse in eine Öffnung einer Wand eingelassen werden kann, und
- eine Kontakthülse (3), die dazu bestimmt ist, einen Ein-/Ausschalter zu bilden, **dadurch gekennzeichnet**
- **dass** die Kontakthülse Strom leitende Lamellen (30, 31) aufweist, wobei die Hülse zylindrische Form hat und durch Gleiten im Inneren des Fachs des Gehäuses eingelassen ist, wobei das Fach ebenfalls entsprechend zylindrisch ist, wobei das Einlassen der Hülse in das Gehäuse stationär und mit Mitteln versehen ist, um einer Abreißkraft einer Stromsteckdose standzuhalten,
- **dass** die Stromleiter in.Verbindungsräume eingefügt werden, um mit leitenden Platten in Berührung gebracht zu werden, wobei jeder Verbindungsraum von einer Wand des zylindrischen Fachs und von einer Außenwand des Gehäuses abgegrenzt ist, wobei jede der Platten aus einer Wand besteht,
- **dass** die Hülse durch bündiges Gleiten und in Auflage gegen die Wände eingelassen ist, und dass die Lamellen der Hülse beim Einfügen mit den Platten des Gehäuses gegenüber und in Berührung mit ihnen liegen.

3. Elektrischer Einschluss (1) nach einem der Ansprüche 1 bis 2, **dadurch gekennzeichnet, dass** das zylindrische Fach (4) im Inneren des Gehäuses zentriert ist.

4. Elektrischer Einschluss (1) nach Anspruch 3, **dadurch gekennzeichnet, dass** das zylindrische Fach T-Form hat.

5. Elektrischer Einschluss (1) nach einem der Ansprüche 1 bis 4, **dadurch gekennzeichnet, dass** das zylindrische Fach eine Erweiterung (57), die als Unverwechselbarkeitselement an einer inneren Peripherie (6) des zylindrischen Fachs dient, aufweist, dass die Erweiterung vorzugsweise gemäß einem Querschnitt des Gehäuses eine rechteckige Form mit einer Länge (58) von 10 oder 12 Millimeter hat, die sich über eine ganze Tiefe (8) des Gehäuses erstreckt.

6. Elektrischer Einschluss (1) nach einem der Ansprüche 1 bis 5, **dadurch gekennzeichnet, dass** das zylindrische Fach (4) drei kommunizierende zylindrische Hohlräume (11, 12, 13) aufweist, die jeweils mit einem Teil (17, 18, 19) versehen sind, der einen Verbindungsraum (22, 23, 24) abgrenzt, der dazu bestimmt ist, Enden von Stromleitern aufzunehmen, getrennt von einem Hauptraum (5), der dazu bestimmt ist, die Hülse aufzunehmen, wobei die Hülse mit diesen Teilen bündig drei zylindrische Vorsprünge (14, 15, 16) aufweist.

7. Elektrischer Einschluss (1) nach Anspruch 6, **dadurch gekennzeichnet, dass** ein Teil der Wand (17, 18, 19) aus einer Strom leitenden Platte (27, 28, 29) ausgebildet ist, wobei die Hülse bündig drei Kontaktlamellen (30, 31, 32) aufweist, die dazu bestimmt sind, mit den Platten in Berührung zu kommen.

8. Elektrischer Einschluss (1) nach einem der Ansprüche 6 bis 7, **dadurch gekennzeichnet, dass** das Gehäuse in den Verbindungsräumen Öffnungen (35, 36, 37) auf einer Vorderseite (33) und Öffnungen (38, 39, 40) auf einer Rückseite (34) des Gehäuses aufweist, wobei diese Öffnungen eine Größe haben, die ein Durchgehen eines einzigen Stromleiters (25) gestattet und sie vorzugsweise derart sind, dass sich die durch diese Öffnungen eingefügten Stromleiter parallel zueinander im Inneren dieser Verbindungsräume überlagern können.

9. Elektrischer Einschluss (1) nach einem der Ansprüche 6 bis 8, **dadurch gekennzeichnet, dass** die Verbindungsräume mit Rippen (41) versehen sind, die auf zwei entgegen gesetzten Innenseiten (43, 44) eingefügt sind, wobei diese Rippen geneigt werden können und zu einer Einfügerichtung eines Stromleiters schräg sind.

10. Elektrischer Einschluss nach einem der Ansprüche 1 bis 9, **dadurch gekennzeichnet, dass** das Gehäuse mit mindestens einem Raum (47, 48, 49) ausgehöhlt ist, der teilweise das zylindrische Fach (4) umgeht, vorzugsweise jeweils mit mindestens einem vorausgeschnittenen Durchgang (54, 55, 56) versehen.

11. Elektrischer Einschluss nach einem der Ansprüche 1 bis 10, **dadurch gekennzeichnet, dass** das Gehäuse Verbindungsabstandshalter (20, 21) von Wänden (17, 18, 19) zum Gehäuse aufweist, wobei diese Abstandshalter einen Verbindungsraum abgrenzen, um Strom leitende Platten zu halten, und Hohlkehlen (74, 75) aufweisen, um die Stromleiter gleiten zu lassen.

12. Montageverfahren für einen elektrischen Einschluss, der den folgenden Schritt aufweist:
- Einfügen eines Gehäuses (2) in eine Wand, **dadurch gekennzeichnet, dass** es die folgenden Schritte aufweist:
- man lässt Stromleiter, die von der Wand kommen, in Verbindungsräume (22, 23, 24) eines Fachs (4) des Gehäuses durch Öffnungen (38, 39, 40), die von einer Rückseite (34) des Gehäuses kommen, gleiten, bis die Leiter mit Strom leitenden Platten (27, 28, 29) in Berührung sind,
- man lässt eine Hülse (3) durch Gleiten und dann durch elastisches Einrasten in das Innere des Gehäuses ein, und man führt einen elektrischen Anschluss im Laufe dieses Einrastens durch Berührung Strom leitender Lamellen (30, 31), die von der Hülse mit den Platten des Gehäuses gebildet werden, durch, und
- man befestigt eine Abdeckplatte auf dem Gehäuse.

13. Montageverfahren nach Anspruch 12, **dadurch gekennzeichnet,**
- **dass** man weitere Leiter in jeden der Verbindungsräume (22, 23, 24) durch Öffnungen (35, 36, 37), die von einer Vorderseite (33) des Gehäuses kommen, einfügt, und
- **dass** man diese anderen Leiter aus dem Gehäuse durch vorausgeschnittene Durchgänge (54, 55, 56) des Gehäuses austreten lässt.

14. Verfahren für den Gebrauch eines elektrischen Einschlusses (1) nach den Ansprüchen 1 und 2, **dadurch gekennzeichnet,**
- **dass** man die Hülse, die zum Aufnehmen der Kontakte einer abnehmbaren Stromsteckdose bestimmt ist, entfernt und durch die Hülse ersetzt, die dazu bestimmt ist, einen Ein-/Ausschalter zu bilden oder umgekehrt.

15. Einschluss nach einem der Ansprüche 1 bis 14, **dadurch gekennzeichnet, dass** er Führungs- und Ausrichtungsmittel (100, 101) in Bezug auf eine von dem Boden gebildete Ebene aufweist.

16. Einschluss nach einem der Ansprüche 1 bis 15, **dadurch gekennzeichnet, dass** er Schutzzungen (102, 103, 104) aufweist, die um eine Achse (105) neigbar sind, die entlang einer Kante des Gehäuses ausgebildet ist, wobei jede der Zungen dazu bestimmt ist, eine Öffnung (35, 36 und 37) einer Vorderseite (33) des Gehäuses zu verschließen, nämlich die Öffnung (35, 36 und 37) durch welche sich mindestens ein Stromleiter (25) einfügen soll.
